# EUROPÄISCHE PATENTSCHRIFT

(11) **EP 3 924 428 B1**
(45) Veröffentlichungstag und Bekanntmachung des Hinweises auf die Patenterteilung: **17.08.2022**
(21) Anmeldenummer: 19706468.6
(22) Anmeldetag: 14.02.2019
(51) Int. Cl.: C08L 83/12, C08G 65/336, C08L 71/00

(54) **MEHRKOMPONENTIGE VERNETZBARE MASSEN AUF BASIS VON ORGANYLOXYSILANTERMINIERTEN POLYMEREN**
MULTI-COMPONENT CROSSLINKABLE MASSES BASED ON ORGANYLOXYSILANE-TERMINATED POLYMERS
MATIÈRES À COMPOSANTS MULTIPLES RÉTICULABLES À BASE DE POLYMÈRES À TERMINAISON ORGANYLOXYSILANE

(43) Veröffentlichungstag der Anmeldung: 22.12.2021
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2019/053709
(87) Internationale Veröffentlichungsnummer: WO 2020/164717

(56) Entgegenhaltungen:
- WO-A1-2018/074925

## Beschreibung

Die Erfindung betrifft mehrkomponentige vernetzbare Massen auf Basis von silanvernetzenden Polymeren, Verfahren zu deren Herstellung und deren Verwendung als Kleb- und Dichtstoffe.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Kleb- und Dichtstoffen, insbesondere von elastischen Klebesystemen.

So zeigen Klebstoffe auf Basis von alkoxysilanvernetzenden Polymeren im ausgehärteten Zustand nicht nur sehr gute Haftungseigenschaften auf den unterschiedlichsten Substraten, sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanat- oder epoxybasierenden Systemen) ist die toxikologische Unbedenklichkeit.

Dabei werden in vielen Anwendungen einkomponentige Systeme (1K-Systeme) bevorzugt, die nur durch Kontakt mit der Luftfeuchtigkeit aushärten. Die entscheidenden Vorteile von 1K-Systemen ist vor allem deren leichte Applizierbarkeit, da hier keine Mischung verschiedener Klebstoffkomponenten durch den Anwender erforderlich ist. Neben der Arbeitsersparnis und der Vermeidung eventueller Dosierungs- oder sonstiger Mischfehler ist bei einkomponentigen Systeme auch nicht die Notwendigkeit gegeben, den Kleb- bzw. Dichtstoff innerhalb eines meist recht engen Zeitfensters zu verarbeiten, wie dies bei zweikomponentigen Systemen (2K-Systemen) nach erfolgter Durchmischung der beiden Komponenten der Fall ist.

Allerdings besitzen 1K-Systeme den entscheidenden, systemimmanenten Nachteil, nur bei Kontakt mit (Luft-)Feuchtigkeit auszuhärten. Bei tiefen Fugen und/oder großflächigen Verklebungen führt dies zu einer extrem langsamen Härtung von "außen nach innen", die ob der zunehmend langen Diffusionswege umso langsamer verläuft, je weiter die Härtung vorangeschritten ist. Dies gilt insbesondere bei der Verklebung nicht-poröser Substrate (Kunststoffe, Metalle, Lackoberflächen, Glas und glasierte Oberflächen etc.), bei denen dieses Problem auch nicht durch ein vorheriges gleichmäßiges Anfeuchten der Klebefläche gelöst werden kann. Bei entsprechenden Verfugungen und Verklebungen ist somit der Einsatz von 2K-Systemen vorteilhaft bzw. oftmals sogar schlicht unumgänglich.

2K-Klebstoffsysteme auf Basis silanvernetzender Polymere sind bereits bekannt und wurden z.B. in EP-A 824 574 oder EP-A 2 448 976 beschrieben. Typische 2K-Systeme enthalten dabei eine 1. Komponente, die das silanterminierte Polymer sowie weitere Klebstoffkomponenten wie Weichmacher, Füllstoffe, Katalysatoren, Stabilisatoren etc. enthält. In der 2. Komponente befindet sich dann Wasser sowie weitere nicht-wasserreaktive Verbindungen wie Füllstoffe oder Weichmacher, gegebenenfalls auch Dickungsmittel, wie z.B. Cellulosederivate, sowie weitere Komponenten.

Diese Systeme entsprechend des Standes der Technik stellen den Fachmann jedoch vor das Problem, dass extrem geringe Wassermengen in der 2. Komponente ausreichend sind, um das Polymer in der 1. Komponente nach einer Durchmischung beider Komponenten aushärten zu lassen. Und aus Gründen der schlechten wechselseitigen Löslichkeit von silanterminiertem Polymer und Wasser kann die 2. Komponente dabei auch keine wesentlich größeren - zusätzlichen - Wassermengen enthalten. Eine 2. Komponente, die Wasser als einzige Flüssigkeit enthält, wäre somit entweder fest (z.B. beim Zusatz großer Füllstoffmengen), was aber unter realen Anwendungsbedingungen kaum praktikabel wäre, oder aber die 2. Komponente dürfte der 1. Komponente bei der Anwendung lediglich in kleinsten Mengen (z.B. in einem Mischungsverhältnis von 1:100) zugesetzt werden, was ebenso wenig praktikabel wäre.

Demnach muss die 2. Komponente neben dem Wasser noch eine zweite flüssige nicht-wasserreaktive Substanz enthalten. Dafür kommen in der Regel aber nur nichtreaktive Weichmacher in Frage. Weichmacherfreie 2K-Systeme sind mit dieser Technologie somit nicht möglich.

Nichtreaktive Weichmacher werden jedoch nicht in das entstehende Polymernetzwerk eingebaut. Demnach können sie ausschwitzen, in Untergründe migrieren oder sich bei geringeren Molekülgrößen auch gasförmig verflüchtigen. All dies hat meist unerwünschte Eigenschaftsänderungen zur Folge, z.B. ein Schrumpfen und/oder eine Versprödung des jeweiligen Kleb- oder Dichtstoffes. Zudem kann eine Weichmacher-Migration in den Untergrund auch zu unschönen Verfärbungen desselben führen, was insbesondere bei dekorativen Untergründen, z.B. aus Naturstein, absolut inakzeptabel ist. Daher stellt die fehlende Option zur Entwicklung von weichmacherfreien 2K-Systemen in vielen Fällen einen kritischen Nachteil dar.

Zwar sind 2K-Systeme möglich, die, wenngleich sie nicht weichmacherfrei sind, zumindest nur kleine Weichmachermengen enthalten, und so die mit einem Weichmacherzusatz einhergehenden Probleme minimieren. Doch auch solche Systeme stellen den Entwickler vor ein ernstes Problem. Denn wenn der Weichmacher nur in kleinen Mengen eingesetzt werden soll, kann die 2. wasser- und weichmacherhaltige Komponente somit auch nur ebendiese kleinen Weichmachermengen enthalten und folglich nur ein kleines Volumen besitzen. Demnach darf diese 2. Komponente der 1. Komponente bei der Anwendung nach wie vor nur in vergleichbar kleinen Mengen zugemischt werden, z.B. in einem Mengenverhältnis von 1:10 (vgl. Beispiele aus EP-A 824 574 oder Beispiel 2 aus EP-A 2 448 976). Dies ist zwar prinzipiell praktikabel, aber das Erreichen einer auch nur halbwegs exakten Mischgenauigkeit ist für den Anwender nicht einfach und somit wenig komfortabel. Außerdem ist ein solches System sehr anfällig für Mischfehler.

Einfacher zu verarbeiten und weniger fehleranfällig sind 2K-Systeme, in denen beide Komponenten im Verhältnis 1:1 vermischt werden. Dies aber ist, wie bereits ausgeführt, mit konventionellen 2K-Technologien jedoch nur dann möglich, wenn das gesamte 2K-System größere Weichmachermengen enthält (vgl. Beispiel 1 aus EP-A 2 448 976), was in vielen Fällen jedoch nicht erwünscht ist.

Wesentlich günstiger sind hier 2K-Systeme, die feuchtigkeitsvernetzende Polymere in beiden Komponenten enthalten und somit nicht mehr auf einen Weichmacher in der 2. Komponenten angewiesen sind. Solche Systeme sind beispielsweise in EP-A 1 743 008 oder EP-A 2 009 063 beschrieben.

Diese Technologie basiert auf der Idee, dass die eingesetzten silanvernetzbaren Polymere so reaktionsträge sind, dass sie ohne Katalysator auch in Gegenwart von Wasser nicht vernetzen. Demnach können die Polymere in beiden Komponenten zugegen sein, wobei die 1. Komponenten zusätzlich noch einen Härtungskatalysator und die 2. Komponenten Wasser enthält.

Nachteilig ist an dieser Technologie ist jedoch die Tatsache, dass nur sehr reaktionsträge silanterminierte Polymere eingesetzt werden können, die in der 2. Komponente auch in Gegenwart von Wasser über Monate hinweg unvernetzt bleiben und zu keinen deutlichen und selbstverständlich unerwünschten Viskositätserhöhungen oder gar einem Gelieren führen. Diese Reaktionsträgheit der einzusetzenden Polymere hat natürlich zur Folge, dass die bei der letztendlichen Applikation erwünschte Vernetzung nur in Gegenwart vergleichsweise großer Mengen ausgesprochen wirksamer Katalysatoren halbwegs zügig stattfinden kann. D.h., diese Systeme müssen in der Regel große Mengen toxikologisch bedenklicher Zinnkatalysatoren in der ersten Komponente enthalten. Hochreaktive, schnell härtende und zinnfreie oder zumindest zinnarme 2K-Systeme sind mit dieser Technologie nicht darstellbar.

Ein weiterer Nachteil einer aggressiven (Zinn-)Katalyse, wie sie in derartigen 2K-Systemen unvermeidlich ist, ist durch die negativen Auswirkungen der entsprechenden Katalysatoren auf die Lagerstabilität der entsprechenden Massen gegeben. So können hochreaktive Katalysatoren Abbaureaktionen der silanterminierten Polymere und/oder sonstiger Rezepturbestandteilen katalysieren. Typische Abbaureaktionen sind dabei u.a. die bei silanterminierten Polyurethanen auftretende Spaltung der Urethan- und/oder Harnstoffeinheiten im Polymerrückgrat wie auch die - wenngleich meist langsamer verlaufende - Spaltung der in den Polymeren enthaltenen Ether- sowie der gegebenenfalls ebenfalls vorhandenen Esterbindungen.

Dieselben von aggressiven Katalysatoren beschleunigten Abbaureaktionen wirken sich auch negativ auf die Thermostabilität der entsprechenden Kleb- oder Dichtstoffe aus.

Das Dokument WO 2018/074925 A1 offenbart vernetzbare Massen, die ein Polymer verwendet, das dem vorliegenden Polymer A2 entspricht.

Es bestand die Aufgabe zweikomponentige Kleb- oder Dichtstoffe auf Basis silanterminierter Polymere bereitzustellen, mit denen die Nachteile des Standes der Technik überwunden werden können. Gegenstand der Erfindung sind mehrkomponentige vernetzbare Massen (K) enthaltend mindestens eine Komponente (K1) und eine Komponente (K2), dadurch gekennzeichnet, dass **Komponente (K1)** Organosiliciumverbindungen (A1) ausgewählt aus Verbindungen (A1a) der Formel (Ia)

Y¹-[B¹CR²₂SiRₐ(OR¹)₃₋ₐ]ₓ (Ia)

und Verbindungen (A1b) der Formel (Ib)

Y²-[B²-(CR⁴₂)_{b}-Si(OR³)₃]_{y} (Ib)

enthält, wobei
- Y¹: einen x-wertigen, über Kohlenstoff gebundenen Polymerrest bedeutet,
- Y²: einen y-wertigen, über Kohlenstoff gebundenen Polymerrest bedeutet,
- B¹ und B²: jeweils unabhängig voneinander gleich oder verschieden sein können und eine zweiwertige Bindegruppe -O-, -NH-, -NR'-, -O-CO-NH-, -NH-CO-O-, -NH-CO-NH, -NH-CO-NR'-, -NR'-CO-NH-, -NH-CO-, -CO-NH-, -CO-O-, -O-CO-, -O-CO-O-, -S-CO-NH-, -NH-CO-S-, -CO-S-, -S-CO- oder -S- bedeuten,
- R': gleich oder verschieden sein kann und einen einwertigen, gegebenenfalls substituierten Kohlenwasserstoffrest oder eine Gruppe -CH(COOR*)-CH₂-COOR* darstellt, wobei R* für einen Alkylrest steht,
- R: gleich oder verschieden sein kann und einen einwertigen, gegebenenfalls substituierten, SiC-gebundenen Kohlenwasserstoffrest darstellt,
- R¹ und R³: jeweils unabhängig voneinander gleich oder verschieden sein können und Wasserstoffatom oder einen einwertigen, gegebenenfalls substituierten Kohlenwasserstoffrest darstellen,
- R² und R⁴: jeweils unabhängig voneinander gleich oder verschieden sein können und Wasserstoffatom oder einen einwertigen, gegebenenfalls substituierten Kohlenwasserstoffrest darstellen, der über Stickstoff, Phosphor, Sauerstoff, Schwefel oder Carbonylgruppe an das Kohlenstoffatom angebunden sein kann,
- x und y: jeweils unabhängig voneinander eine ganze Zahl von 1 bis 10, bevorzugt 1, 2 oder 3, besonders bevorzugt 2 oder 3, insbesondere 2, sind,
- a: gleich oder verschieden sein kann und 0, 1 oder 2, bevorzugt 0 oder 1, ist, mit der Maßgabe, dass im Fall von x=1 a=0 ist,
- b: gleich oder verschieden sein kann und eine ganze Zahl von 3 bis 10, bevorzugt 3 oder 4, besonders bevorzugt 3, ist,
und **Komponente (K2)**, jeweils bezogen auf 100 Gewichtsteile Verbindungen (A1) in Komponente (K1), mindestens 0,05 Gewichtsteile Wasser sowie 10 bis 1000 Gewichtsteile einer Komponente (A2) ausgewählt aus Verbindungen (A2a) der Formel (IIa)

Y³-B³-CR⁷₂-SiR⁵_{c}(OR⁶)_{3-c} (IIa)

und Verbindungen (A2b) der Formel (IIb)

Y⁴-[B⁴-(CR¹⁰₂)ₑ-SiR⁸_{d}(OR⁹)_{3-d}]_{z} (IIb)

enthält, wobei
- Y³: einen einwertigen, über Kohlenstoff gebundenen Polymerrest bedeutet,
- Y⁴: einen z-wertigen, über Kohlenstoff gebundenen Polymerrest bedeutet,
- B³ und B⁴: jeweils unabhängig voneinander gleich oder verschieden sein können und eine zweiwertige Bindegruppe -O-, -NH-, -NR"-, -O-CO-NH-, -NH-CO-O-, -NH-CO-NH, -NH-CO-NR"-, -NR"-CO-NH-, -NH-CO-, -CO-NH-, -CO-O-, -O-CO-, -O-CO-O-, -S-CO-NH-, -NH-CO-S-, -CO-S-, -S-CO- oder -S- bedeuten,
- R": gleich oder verschieden sein kann und einen einwertigen, gegebenenfalls substituierten Kohlenwasserstoffrest oder eine Gruppe -CH(COOR*)-CH₂-COOR* darstellt, wobei R* für einen Alkylrest steht,
- R⁵ und R⁸: jeweils unabhängig voneinander gleich oder verschieden sein können und einen einwertigen, gegebenenfalls substituierten, SiC-gebundenen Kohlenwasserstoffrest darstellen,
- R⁶ und R⁹: jeweils unabhängig voneinander gleich oder verschieden sein können und Wasserstoffatom oder einen einwertigen, gegebenenfalls substituierten Kohlenwasserstoffrest darstellen,
- R⁷ und R¹⁰: jeweils unabhängig voneinander gleich oder verschieden sein können und Wasserstoffatom oder einen einwertigen, gegebenenfalls substituierten Kohlenwasserstoffrest darstellen, der über Stickstoff, Phosphor, Sauerstoff, Schwefel oder Carbonylgruppe an das Kohlenstoffatom angebunden sein kann,
- z: eine ganze Zahl von 1 bis 10, bevorzugt 1, 2 oder 3, besonders bevorzugt 2 oder 3, insbesondere 2, ist,
- c: 1 oder 2, bevorzugt 1, ist,
- d: gleich oder verschieden sein kann und 1 oder 2, bevorzugt 1, ist und
- e: gleich oder verschieden sein kann und eine ganze Zahl von 3 bis 10, bevorzugt 3 oder 4, besonders bevorzugt 3, ist.

Vorzugsweise handelt es sich bei den erfindungsgemäßen Massen (K) um zweikomponentige Massen, die aus den Komponenten (K1) und (K2) bestehen.

Die Komponenten (K1) und (K2) der erfindungsgemäßen Massen (K) werden bevorzugt während der Lagerung getrennt aufbewahrt und kurz vor oder auch erst während der Applikation der erfindungsgemäßen Masse (K) miteinander vermischt. Vorzugsweise werden die Komponenten (K1) und (K2) maximal 60 min, besonders bevorzugt maximal 30 min, insbesondere maximal 10 min, vor der Applikation miteinander vermischt werden. Auch ein Mischen der Komponenten (K1) und (K2) erst während der Applikation stellt eine insbesondere bevorzugte Ausführung der Erfindung dar.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie ∘-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste und Halogenarylreste, wie der ∘-, m- und p-Chlorphenylrest.

Beispiele für Reste R⁵ und R⁸ sind die für Rest R oben angegebenen Beispiele.

Jeweils unabhängig voneinander handelt es sich bei den Resten R, R⁵ und R⁸ bevorzugt um gegebenenfalls mit Halogenatomen substituierte, einwertige, SiC-gebundene Kohlenwasserstoffreste mit 1 bis 6 Kohlenstoffatomen, besonders bevorzugt um Alkylreste mit 1 oder 2 Kohlenstoffatomen, insbesondere um Methylreste.

Beispiele für Reste R¹, R³, R⁶ und R⁹ sind Wasserstoffatom und die für die Reste R angegebenen Beispiele.

Jeweils unabhängig voneinander handelt es sich bei den Resten R¹, R³, R⁶ und R⁹ bevorzugt um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um Methyl- oder Ethylreste.

Ganz besonders bevorzugt handelt es sich bei allen Resten R¹, R³, R⁶ und R⁹ um Methylreste.

Beispiele für Reste R², R⁴, R⁷ und R¹⁰ sind Wasserstoffatom, die für Rest R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Jeweils unabhängig voneinander handelt es sich bei den Resten R², R⁴, R⁷ und R¹⁰ bevorzugt um Wasserstoffatom oder Kohlenwasserstoffreste mit 1 bis 20 Kohlenstoffatomen, insbesondere um Wasserstoffatom.

Bei den Bindegruppen B¹ und B² handelt es sich unabhängig voneinander vorzugsweise um -O-, -NH-, -NR'-, -O-CO-NH-, -NH-CO-O-, -NH-CO-NH, -NH-CO-NR'- oder -NR'-CO-NH-, wobei Bindegruppen -O-, -O-CO-NH-, -NH-CO-O-, -NH-CO-NR'- oder -NR'-CO-NH- bevorzugt sind, besonders bevorzugt -O- oder -O-CO-NH-, insbesondere -O-CO-NH-.

Bei den Bindegruppen B³ und B⁴ handelt es sich unabhängig voneinander vorzugsweise um -O-, -NH-, -NR"-, -O-CO-NH-, -NH-CO-O-, -NH-CO-NH, -NH-CO-NR"- oder -NR"-CO-NH-, wobei Bindegruppen -O-, -O-CO-NH-, -NH-CO-O-, -NH-CO-NR"- oder -NR"-CO-NH- bevorzugt sind, besonders bevorzugt -O- oder -O-CO-NH-, insbesondere -O-CO-NH-.

Beispiele für Reste R' und R" sind Cyclohexyl-, Cyclopentyl-, n- und iso-Propyl-, n-, iso- und t-Butylreste, die diversen Stereoisomere des Pentylrests, Hexylrests oder Heptylrests, Phenylreste oder Reste der Formel -CH(COOR*)-CH₂-COOR*, wobei R* für einen Alkylrest steht.

Unabhängig voneinander handelt es sich bei den Resten R' und R" vorzugsweise um eine Gruppe -CH(COOR*)-CH₂-COOR* oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Bei den Resten R* handelt es sich vorzugsweise um Alkylgruppen mit 1 bis 10 Kohlenstoffatomen, besonders bevorzugt um Methyl-, Ethyl- oder Propylreste.

Bei den Polymerresten Y¹, Y², Y³ und Y⁴ handelt es sich unabhängig voneinander bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen, Polyethylen oder Polypropylen und Copolymere von Polyisobutylen mit Isopren; Polyisoprene; Polyurethane; Polyester; Polyamide; Polyacrylate; Polymethacrylate; oder Polycarbonate enthalten.

Vorzugsweise weisen die Polymerreste Y¹, Y², Y³ und Y⁴ unabhängig voneinander keine mit Wasser oder Feuchtigkeit reaktiven Gruppen auf. Insbesondere weisen sie unabhängig voneinander keine mit Wasser oder Feuchtigkeit reaktiven Gruppen und keine siliciumhaltigen Gruppen, vor allem keine Alkoxysilylgruppen, auf.

Jeweils unabhängig voneinander handelt es sich bei den Polymerresten Y¹, Y², Y³ und Y⁴ besonders bevorzugt um Polyurethanreste und Polyoxyalkylenreste, insbesondere um polyoxypropylenhaltige Polyurethanreste oder Polyoxypropylenreste.

Sofern Y¹, Y², Y³ und/oder Y⁴ für Polyurethanreste stehen, sind diese unabhängig voneinander vorzugsweise aus linearen oder verzweigten Polyoxyalkylenen, insbesondere aus Polypropylenglycolen, und Di- oder Polyisocyanaten herstellbar.

Sofern Y¹, Y², Y³ und/oder Y⁴ für Polyoxyalkylenreste stehen, handelt es sich unabhängig voneinander bevorzugt um lineare oder verzweigte Polyoxyalkylenreste, besonders bevorzugt um Polyoxypropylenreste.

Die Polyoxyalkylenreste Y¹, Y², Y³ und Y⁴ weisen unabhängig voneinander vorzugsweise zahlenmittlere Molmassen Mₙ von 10 000 bis 30 000 g/mol, besonders bevorzugt von 11 000 bis 20 000 g/mol, auf.

Die zahlenmittlere Molmasse Mₙ ist dabei mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmbar.

Die erfindungsgemäß eingesetzten Verbindungen (Ala), (Alb), (A2a) und (A2b) können dabei unabhängig voneinander die alkoxysilanfunktionellen Gruppen an beliebigen Stellen im Polymer aufweisen, wie etwa kettenständig und/oder endständig, bevorzugt endständig.

Bevorzugt handelt es sich bei den Verbindungen (Ala), (Alb), (A2a) und (A2b) unabhängig voneinander um silanterminierte Polyoxyalkylene, besonders bevorzugt um silanterminierte Polyoxypropylene der Formeln (Ia), (Ib), (IIa) bzw. (IIb), wobei R, R⁵ und R⁸ für Methylreste, R¹, R³, R⁶ und R⁹ für Methyl- oder Ethylreste, insbesondere für Methylreste, R², R⁴, R⁷ und R¹⁰ für Wasserstoffatom, B¹, B², B³ und B⁴ für -O- oder -O-CO-NH-, insbesondere -O-CO-NH-, a für 0 oder 1, b für 3, c für 1 und d für 1 steht. Die silanterminierten Polyoxyalkylene weisen dabei außer den in den Formeln dargestellten silanfunktionellen Endgruppen vorzugsweise ausschließlich Polyethereinheiten auf.

Vorzugsweise besitzen die erfindungsgemäß eingesetzten Polymere (Ala), (A1b) und (A2b) pro Molekül 2 oder 3, besonders bevorzugt 2, silanfunktionelle Endgruppen. Die erfindungsgemäßen Polymere (A2a) besitzen genau eine silanfunktionelle Endgruppe.

Silanterminierte Polyoxyalkylene (Ala), (Alb), (A2a) und (A2b), bei denen B¹, B², B³ und B⁴ für -O-CO-NH- steht, lassen sich auf einfache Weise durch Umsetzung von gängigen, mit Hydroxylgruppen terminierten Polyoxyalkylenen und Silanen der Formeln

OCN-CR²₂-SiRₐ(OR¹)₃₋ₐ (IIIa),

OCN-(CR⁴₂)_{b}-Si(OR³)₃ (IIIb),

OCN-CR⁷₂-SiR⁵_{c}(OR⁶)_{3-c} (III'a)

bzw.

OCN-(CR¹⁰₂)ₑ-SiR⁸_{d}(OR⁹)_{3-d} (III'b)

darstellen, wobei alle Reste und Indizes eine der oben genannten Bedeutungen haben.

Ein anderes gängiges Verfahren zur Herstellung der Verbindungen der Formeln (Ib) und/oder (IIb) sieht eine Hydrosilylierung von terminal ungesättigten Polyoxyalkylenen mit entsprechenden SiHfunktionellen Silanen vor.

Die zahlenmittleren Molekulargewichte Mₙ der Verbindungen (Ala), (Alb), (A2a) und (A2b) betragen unabhängig voneinander vorzugsweise 10 000 g/mol bis 30 000 g/mol, besonders bevorzugt 11 000 g/mol bis 24 000 g/mol, insbesondere 11 000 g/mol bis 22 000 g/mol.

Die Viskosität der erfindungsgemäß eingesetzten Verbindungen (Ala), (Alb), (A2a) und (A2b) beträgt unabhängig voneinander vorzugsweise 0,2 Pas bis 700 Pas, bevorzugt 1 Pas bis 100 Pas, besonders bevorzugt 5 Pas bis 100 Pas, jeweils gemessen bei 20°C.

Die erfindungsgemäß eingesetzten Verbindungen (Ala), (Alb), (A2a) und (A2b) können jeweils nur eine Art von Verbindung der Formeln (Ia), (Ib), (IIa) bzw. (IIb) darstellen wie auch Gemische unterschiedlicher Arten der entsprechenden Verbindungen.

Die erfindungsgemäß eingesetzten Verbindungen (Ala), (Alb), (A2a) und (A2b) sind handelsübliche Produkte oder können nach in der Chemie gängigen Verfahren hergestellt werden.

Bei den erfindungsgemäß eingesetzten Organosiliciumverbindungen (A1) kann es sich nur um Verbindungen (A1a) oder nur um Verbindungen (A1b) oder um Mischungen aus Verbindungen (A1a) mit Verbindungen (A1b) handeln, wobei es sich bevorzugt um Verbindungen (A1a) oder Mischungen aus Verbindungen (A1a) und (Alb), besonders bevorzugt um Verbindungen (Ala), handelt. Sofern es sich bei Organosiliciumverbindungen (A1) um Mischungen aus Verbindungen (A1a) mit (A1b) handelt, liegt das Mischungsverhältnis von Verbindungen (A1a) zu Verbindungen (A1b) vorzugsweise bei 0,1 bis 10, besonders bevorzugt bei 0,2 bis 5, jeweils bezogen auf das Gewicht.

Bei den erfindungsgemäß eingesetzten Organosiliciumverbindungen (A2) kann es sich nur um Verbindungen (A2a) oder nur um Verbindungen (A2b) oder um Mischungen aus Verbindungen (A2a) mit Verbindungen (A2b) handeln, wobei es sich bei den Verbindungen (A2) bevorzugt ausschließlich um Verbindungen (A2a) oder ausschließlich um Verbindungen (A2b) handelt.

Vorzugsweise enthält mindestens eine der Komponenten (K1) oder (K2) Polymere, die über sogenannte α-Silylgruppen verfügen, bei denen die silanvernetzende Gruppe von der Bindegruppe nur durch einen Methylenspacer getrennt ist. D.h. vorzugsweise enthält die Komponente (A1) Verbindungen (A1a) und/oder die Komponente (A2) enthält Verbindungen (A2a).

In einer besonders bevorzugten Ausführungsform der Erfindung enthält Komponente (A1) Verbindungen (A1a) und Komponente (A2) Verbindungen (A2b), insbesondere besteht Organosiliciumverbindung (A1) aus Verbindungen (Ala), und Organosiliciumverbindung (A2) besteht aus Verbindungen (A2b).

Vorzugsweise enthält Komponente (K2) 20 bis 500 Gewichtsteile, besonders bevorzugt 50 bis 200 Gewichtsteile Organosiliciumverbindungen (A2), jeweils bezogen auf 100 Gewichtsteile Organosiliciumverbindungen (A1) in Komponente (K1).

Vorzugsweise enthält Komponente (K2) 0,1 bis 10 Gewichtsteile, besonders bevorzugt 0,2 bis 5 Gewichtsteile, insbesondere 0,4 bis 3 Gewichtsteile, Wasser, jeweils bezogen auf 100 Gewichtsteile Organosiliciumverbindungen (A1) in Komponente (K1).

In einer weiteren bevorzugten Ausführungsform enthält die Komponente (K1) zusätzlich zu Verbindungen (A1), vorzugsweise (Ala), auch Verbindung (A2a). Falls Komponente (K1) Verbindung (A2a) enthält, handelt es sich um Mengen von vorzugsweise 1 bis 100 Gewichtsteilen, besonders bevorzugt 5 bis 50 Gewichtsteilen, insbesondere 10 bis 30 Gewichtsteilen, Verbindung (A2a), jeweils bezogen auf 100 Gewichtsteile Organosiliciumverbindungen (A1) in Komponente (K1). Die erfindungsgemäße Verwendung von Verbindungen (A2a) und/oder (A2b) in Komponente (K2) wird von dieser zusätzlichen Verwendung der Verbindung (A2a) in Komponente (K1) nicht tangiert.

Das erfindungsgemäß eingesetzte Wasser kann direkt als solches, in Form von wässrigen Zubereitungen oder als in Feststoffen enthaltenes oder von ihnen absorbiertes Wasser vorliegen.

Beispiele für wässrige Zubereitungen sind wässrige Emulsionen, wie z.B. Emulsionen von Wasser in Weichmacher, organischem Lösungsmittel und/oder Siliconharzen. Gegebenenfalls kann dabei auch ein Verdickungsmittel und/oder Füllstoffe zugegen sein.

Beispiele für in Feststoffen enthaltenes Wasser sind an Füllstoffen gebundene Feuchtigkeit, wie z.B. hochdisperse Füllstoffe, wie hydrophile Kieselsäuren oder gemahlene Calciumcarbonate, die bis zu über 1 Gew.-% an der Oberfläche gebundenes Wasser enthalten können.

Weitere Beispiele für in Feststoffen enthaltenes Wasser sind Füllstoffe, wie gefällte Calciumcarbonate, Zeolite oder auch gegebenenfalls aktivierte kolloidale Magnesium-Aluminium-Silikate, die im Inneren der Füllstoffteilchen physikalisch gebundenes Wasser enthalten, oder mit wachsartigen oder harzartigen Polymeren umschlossene Wasserpartikel.

Bevorzugt wird zur erfindungsgemäßen Herstellung der Komponente (K2) Wasser direkt als solches eingesetzt.

Zusätzlich zu den Verbindungen (Ala), (Alb), (A2a) und/oder (A2b) und Wasser können die erfindungsgemäßen Massen (K) alle weiteren Stoffe enthalten, die auch bisher in vernetzbaren Massen eingesetzt wurden und die unterschiedlich sind zu Verbindungen (Ala), (Alb), (A2a), (A2b) und Wasser, wie z.B. basischen Stickstoff aufweisende Organosiliciumverbindung (B), Füllstoffe (C), Siliconharze (D), Katalysatoren (E), Haftvermittler (F), Wasserfänger (G), Verdickungsmittel (H), nicht-reaktive Weichmacher (I), organische Lösungsmittel (J), Additive (L) und Zuschlagstoffe (M).

Bei den in den erfindungsgemäßen Massen (K) gegebenenfalls eingesetzten Verbindungen (B) handelt es sich vorzugsweise um Organosiliciumverbindungen enthaltend Einheiten der Formel

DₕSi(OR¹¹)gR¹²_{f}O_{(4-f-g-h)/2} (IV),

worin
- R¹¹: gleich oder verschieden sein kann und Wasserstoffatom oder gegebenenfalls substituierte Kohlenwasserstoffreste bedeutet,
- D: gleich oder verschieden sein kann und einen einwertigen, SiC-gebundenen Rest mit basischem Stickstoff bedeutet,
- R¹²: gleich oder verschieden sein kann und einen einwertigen, gegebenenfalls substituierten, SiC-gebundenen, von basischem Stickstoff freien organischen Rest bedeutet,
- f: 0, 1, 2 oder 3, bevorzugt 1 oder 0, ist,
- g: 0, 1, 2 oder 3, bevorzugt 1, 2 oder 3, besonders bevorzugt 2 oder 3, ist und
- h: 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist.

Bei den erfindungsgemäß gegebenenfalls eingesetzten Organosiliciumverbindungen (B) kann es sich sowohl um Silane handeln, d.h. Verbindungen der Formel (VI) mit f+g+h=4, als auch um Siloxane, d.h. Verbindungen enthaltend Einheiten der Formel (IV) mit f+g+h<3, wobei es sich bevorzugt um Silane handelt.

Beispiele für gegebenenfalls substituierte Kohlenwasserstoffreste R¹¹ sind die für Rest R angegebenen Beispiele.

Bei den Resten R¹¹ handelt es sich vorzugsweise um Wasserstoffatom oder gegebenenfalls mit Halogenatomen substituierte Kohlenwasserstoffreste mit 1 bis 18 Kohlenstoffatomen, besonders bevorzugt um Wasserstoffatom oder Kohlenwasserstoffreste mit 1 bis 10 Kohlenstoffatomen, insbesondere um Methyl- oder Ethylrest.

Beispiele für Rest R¹² sind die für R angegebenen Beispiele.

Bei Rest R¹² handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-(C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (IV) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH (CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ oder cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃ oder cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (B) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (B) als Haftvermittler und/oder als Wasserfänger wirken.

Die erfindungsgemäß gegebenenfalls eingesetzten Organosiliciumverbindungen (B) sind handelsübliche Produkte bzw. nach in der Chemie gängigen Verfahren herstellbar.

Falls basischen Stickstoff aufweisende Organosiliciumverbindungen (B) eingesetzt werden, sind diese vorzugsweisen Bestandteile der Komponente (K1).

Falls Komponente (K1) Verbindungen (B) enthält, handelt es sich um Mengen von bevorzugt 0,1 bis 25 Gewichtsteilen, besonders bevorzugt 0,5 bis 10 Gewichtsteilen, jeweils bezogen auf 100 Gewichtsteile sämtlicher in der Mischung (K) eingesetzten Verbindungen (Ala), (Alb), (A2a) und/oder (A2b). Die erfindungsgemäße Komponente (K1) enthält bevorzugt Verbindungen (B).

Bei den in den erfindungsgemäßen Massen (K) gegebenenfalls eingesetzten Füllstoffen (C) kann es sich um beliebige, bisher bekannte Füllstoffe handeln.

Beispiele für Füllstoffe (C) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie gemahlene als auch calcinierte Aluminium-, Titan-, Eisen- oder Zinkoxide bzw. deren Mischoxide. Generell ist die Morphologie, ob scharfkantig bis hin zu kartoffelförmig oder sphärisch, unbegrenzt, da sowohl gebrochene als auch gemahlene Typen verwendet werden können. Die Größe dieser Füllstoffe liegt vorzugsweise in einem Bereich von 0,01µm bis 100 µm, insbesondere von 0,1µm bis 50µm.

Weiterhin eignen sich Salze wie Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, Alumosilicate, Tonmineralien, Magnesium-AluminiumSilikate, wie etwa solche erhältlich unter der Handelsbezeichnung Micro-sorb^{®} bei der Fa. BASF, hohlkugelförmiger Füllstoffe, wie keramische Mikrokugel, wie z.B. solche erhältlich unter der Handelsbezeichnung Zeeospheres^{™} bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (C) um Calciumcarbonat, Talkum, Kieselsäure oder Aluminiumtrihydroxid.

In der Komponente (K2) werden zudem bevorzugt Magnesium-Aluminium-Silikate eingesetzt, da diese eine hohe Absorptionsfähigkeit für das dieser Komponente ebenfalls zugesetzte Wasser aufweisen.

Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (C) haben einen Feuchtigkeitsgehalt von bevorzugt unter 1 Gew.-%, besonders bevorzugt von unter 0,5 Gew.-%.

Füllstoffe (C) können dabei sowohl Bestandteil von Komponente (K1) als auch von Komponente (K2) sein. Ebenso können sie auch in beiden Komponenten (K1) und (K2) enthalten sein.

Falls die erfindungsgemäßen Massen (K) Füllstoffe (C) enthalten, handelt es sich um Mengen von vorzugsweise 10 bis 1000 Gewichtsteilen, besonders bevorzugt 50 bis 500 Gewichtsteilen, insbesondere 80 bis 300 Gewichtsteilen, jeweils bezogen auf 100 Gewichtsteile sämtlicher in der Mischung (K) eingesetzten Verbindungen (Ala), (Alb), (A2a) und/oder (A2b). Die erfindungsgemäßen Massen (K) enthalten bevorzugt Füllstoffe (C).

In einer bevorzugten Ausführungsform der Erfindung enthalten die erfindungsgemäßen Massen (K) als Füllstoffe (C) eine Kombination aus
a) Calciumcarbonat, Aluminiumtrihydroxid und/oder Talkum mit
b) Kieselsäure, insbesondere pyrogene Kieselsäure, und/oder
c) kolloidalem Magnesium-Aluminium-Silikat,
   vorzugsweise in der Komponente (K2).

Falls die erfindungsgemäßen Massen (K) diese besondere Kombination verschiedener Füllstoffe (C) enthalten, enthalten sie vorzugsweise 0 bis 80 Gewichtsteile, besonders bevorzugt 5 bis 40 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, 0 bis 100, bevorzugt 5 bis 40 Gewichtsteile, kolloidales Magnesium-Aluminium-Silikat, jeweils bezogen auf 100 Gewichtsteile sämtlicher in der Mischung (K) eingesetzten Verbindungen (Ala), (Alb), (A2a) und/oder (A2b).

Bei den in den erfindungsgemäßen Massen (K) gegebenenfalls eingesetzten Siliconharzen (D) handelt es sich vorzugsweise um Phenylsiliconharze.

Beispiele für als Komponenten (D) einsetzbare Siliconharze sind handelsübliche Produkte, z.B. verschiedene SILRES^{®}-Typen der Wacker Chemie AG, wie SILRES^{®} IC 368, SILRES^{®} IC 678, SILRES^{®} IC 232, SILRES^{®} IC 235 oder SILRES^{®} SY231.

Falls die erfindungsgemäßen Massen (K) Harze (D) enthalten, handelt es sich um Mengen von bevorzugt 5 bis 1000 Gewichtsteilen, besonders bevorzugt 10 bis 500 Gewichtsteilen, insbesondere 50 bis 300 Gewichtsteilen, jeweils bezogen auf 100 Gewichtsteile sämtlicher in der Mischung (K) eingesetzten Verbindungen (Ala), (Alb), (A2a) und/oder (A2b).

Die Gesamtmenge an Siliconharz (D) kann sich dabei sowohl vollständig in der Komponente (K1), vollständig in der Komponente (K2) oder auch jeweils in Teilen in beiden Komponenten (K1) und (K2) befinden.

Bei den in den erfindungsgemäßen Massen gegebenenfalls eingesetzten Katalysatoren (E) kann es sich um beliebige, bisher bekannte Katalysatoren für durch Silankondensation härtende Massen handeln.

Beispiele für metallhaltige Härtungskatalysatoren (E) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (E) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin, Guanidinderivate wie Mono-, Di-, Tri-Tetra- oder Pentamethylguanidin.

Ebenfalls als Katalysator (E) können saure Verbindungen eingesetzt werden, wie Phosphorsäure und ihre Ester, Toluolsulfonsäure, Schwefelsäure, Salpetersäure oder auch organische Carbonsäuren, z.B. Essigsäure und Benzoesäure.

Falls die erfindungsgemäßen Massen (K) Katalysatoren (E) enthalten, handelt es sich bevorzugt um zinnarme Katalysatoren, besonders bevorzugt um zinnfreie Katalysatoren (E), insbesondere um metallfreie Katalysatoren (E).

Katalysatoren (E) werden dabei vorzugsweise als Bestandteil der Komponente (K1) eingesetzt.

Falls die erfindungsgemäßen Massen (K) Katalysatoren (E) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile sämtlicher in der Mischung (K) eingesetzten Verbindungen (Ala), (Alb), (A2a) und/oder (A2b).

Falls die erfindungsgemäßen Massen (K) Zinnkatalysatoren (E) enthalten, was nicht bevorzugt ist, handelt es sich um Mengen, dass der Gewichtsanteil Zinn bevorzugt bei höchstens 500 Gew.-ppm, besonders bevorzugt bei höchstens 250 Gew.-ppm, insbesondere bevorzugt bei höchstens 100 Gew.-ppm, liegt, jeweils bezogen auf das Gesamtgewicht der Masse (K).

Die Polymere (A1a) und (A2a) zeichnen sich durch eine sehr hohe Reaktivität gegenüber Wasser aus und benötigen daher in der Regel nur sehr geringe Mengen eines Zinnkatalysators bzw. härten sogar unter vollkommen zinnfreier Katalyse, z.B. in Gegenwart von Aminen als Katalysatoren, hinreichend schnell aus. Überraschenderweise funktioniert diese zinnarme oder zinnfreie Härtung sogar dann, wenn diese Polymere (A1a) bzw. (A2a) mit weniger reaktiven herkömmlichen Polymeren, d.h. Polymeren (A1b) oder (A2b) gemischt werden. Somit härten auch solche 2K-Systeme zügig zinnfrei bzw. zinnarm aus, wenn lediglich eine der beiden

Komponenten (K1) oder (K2) hochreaktive Polymere (A1a) bzw. (A2a) enthält. Dies gilt insbesondere für die o.g. Ausführung der Erfindung, in der Komponente (K1) Verbindungen (A1a) und Komponente (K2) Verbindungen (A2b) enthalten. Insofern stellen zinnfreie Massen (K), die Verbindung (A1a) und/oder (A2a) enthalten, eine besonders bevorzugte Ausführungsform der Erfindung dar.

Bei den in den erfindungsgemäßen Massen (K) gegebenenfalls eingesetzten Haftvermittlern (F) kann es sich um beliebige, bisher für durch Silankondensation härtende Systeme beschriebene und von den Verbindungen (B) unterschiedliche Haftvermittler handeln.

Beispiele für Haftvermittler (F) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylpropypl)-maleinsäureanhydrid, N-(3-Trimethoxysilylpropyl)-harnstoff, N-(3-Triethoxy-silylpropyl)-harnstoff, N-(Trimethoxysilylmethyl)-harnstoff, N-(Methyldimethoxysilylmethyl)-harnstoff, N-(3-Triethoxysilylme-thyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyl-trimethoxysilan, Acryloxymethyl-methyldimethoxysilane, Acryloxymethyl-triethoxysilan und Acryloxymethyl-methyldiethoxysilan sowie deren Teilkondensate.

Falls Haftvermittler (F) eingesetzt werden, können diese in Komponenten (K1) und/oder in Komponente (K2) enthalten sein.

Falls die erfindungsgemäßen Massen (K) Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile sämtlicher in der Mischung (K) eingesetzter Verbindungen (Ala), (Alb), (A2a) und/oder (A2b).

Bei den in den erfindungsgemäßen Massen (K) gegebenenfalls eingesetzten Wasserfängern (G) kann es sich um beliebige, für durch Silankondensation härtenden Systemen beschriebene und von den Verbindungen (B) und (F) unterschiedliche Wasserfänger handeln.

Beispiele für Wasserfänger (G) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls Wasserfänger (G) eingesetzt werden, sind diese vorzugsweisen Bestandteile der Komponente (K1).

Falls Komponente (K1) Wasserfänger (G) enthält, handelt es sich um Mengen von vorzugsweise 0,5 bis 30 Gewichtsteilen, besonders bevorzugt 1 bis 10 Gewichtsteilen, jeweils bezogen auf 100 Gewichtsteile sämtlicher in der Mischung (K) eingesetzter Verbindungen (Ala), (Alb), (A2a) und/oder (A2b). Komponente (K1) enthält bevorzugt Wasserfänger (G).

Bei den in den erfindungsgemäßen Massen (K) gegebenenfalls eingesetzten Verdickungsmittel (H) handelt es sich vorzugsweise um organische Verdickungsmittel, besonders bevorzugt um wasserlösliche oder wasserquellbare Polymere. Beispiele für organische Verdickungsmittel (H) sind Stärke, Dextrine, Oligosaccharide, Cellulose, Cellulosederivate wie Carboxymethylcellulose, Celluloseether, Methylcellulose, Hydroxyethylcellulose oder Hydroxypropylcellulose, Agar-agar, Alginate, Pektine, Gelatine, Carrageen, Tragant, Gummi arabicum, Casein, Polyacrylamid, Poly(meth)acrylsäurederivate, Polyethylenglycol, Polyvinylether, Polyvinylalkohole, Polyamide oder Polyimine.

Falls Verdickungsmittel (H) eingesetzt werden, sind diese vorzugsweisen Bestandteile der Komponente (K2).

Falls die erfindungsgemäße Masse (K) Verdickungsmittel (H), bevorzugt in Komponente (K2), enthält, handelt es sich um Mengen von vorzugsweise 0,5 bis 100 Gewichtsteilen, besonders bevorzugt 1 bis 30 Gewichtsteilen, jeweils bezogen auf 100 Gewichtsteile sämtlicher in der Mischung (K) eingesetzter Verbindungen (Ala), (Alb), (A2a) und/oder (A2b).

Auch die als Füllstoffe (C) bereits beschriebenen pyrogenen Kieselsäuren, Alumosilicate oder Tonmineralien können eine verdickende Wirkung besitzen. Der Einsatz dieser Füllstoffe (C) kann somit auch mit dem Ziel erfolgen, die erfindungsgemäßen Komponenten (K1) und/oder (K2) zu verdicken.

Bevorzugt handelt es sich bei nicht-reaktiven Weichmachern (I) um Phthalsäureester, Adipinsäureester, Benzoesäureester, Glycolester, Ester gesättigter Alkandiole, Phosphorsäureester, Sulfonsäureester, Polyester, Polyether, Polystyrole, Polybutadiene, Polyisobutylene, paraffinische Kohlenwasserstoffe oder hochmolekulare, verzweigte Kohlenwasserstoffe.

Bevorzugt werden nicht-reaktive Weichmacher (I) mit Molmassen, bzw. im Falle polymerer Weichmacher mittlerer Molmassen Mₙ, von 200 bis 20 000 g/mol, besonders bevorzugt von 500 bis 10 000 g/mol, insbesondere von 900 bis 8 000 g/Mol, eingesetzt.

Nicht-reaktive Weichmacher (I) können dabei sowohl Bestandteil von Komponente (K1) als auch von Komponente (K2) sein. Ebenso können sie auch in beiden Komponenten (K1) und (K2) enthalten sein.

Falls die erfindungsgemäßen Massen (K) nicht-reaktive Weichmacher (I) enthalten, handelt es sich um Mengen von vorzugsweise 1 bis 200 Gewichtsteilen, besonders bevorzugt 5 bis 100 Gewichtsteilen, jeweils bezogen auf 100 Gewichtsteile sämtlicher in der Mischung (K) eingesetzter Verbindungen (Ala), (Alb), (A2a) und/oder (A2b). In einer bevorzugten Ausführung der Erfindung enthalten die erfindungsgemäßen Massen (K) keine nicht-reaktiven Weichmacher (I).

Beispiele für Lösungsmittel (J) sind niedermolekulare Ether, Ester, Ketone, aromatische und aliphatische sowie gegebenenfalls halogenhaltige Kohlenwasserstoffe und Alkohole, wobei letztere bevorzugt werden.

Lösungsmittel (J) können dabei sowohl Bestandteil der Komponente (K1) als auch der Komponente (K2) sein. Ebenso können sie auch in beiden Komponenten (K1) und (K2) enthalten sein.

Den erfindungsgemäßen Massen (K) werden vorzugsweise keine organischen Lösungsmittel (J) zugesetzt.

Bei den in den erfindungsgemäßen Massen gegebenenfalls eingesetzten Additiven (L) kann es sich um beliebige, bisher bekannte für silanvernetzende Systeme typische Additive handeln.

Bei den erfindungsgemäß gegebenenfalls eingesetzten Additiven (L) handelt es sich bevorzugt um Antioxidantien, UV-Stabilisatoren, wie z.B. sog. HALS-Verbindungen, Fungizide und Pigmente. Die Komponente (K2) kann zudem auch noch Emulgatoren, die die Verträglichkeit bzw. Emulgierbarkeit von Wasser und den übrigen Bestandteilen dieser Komponente verbessern, als Additive enthalten. Dabei kann es sich sowohl um ionische als auch um nichtionische Emulgatoren handeln.

Additive (L) können dabei sowohl Bestandteil von Komponente (K1) als auch in Komponente (K2) sein. Ebenso können sie auch in beiden Komponenten, (K1) und (K2), enthalten sein.

Falls die erfindungsgemäßen Massen (K) Additive (L) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile sämtlicher in der Mischung (K) eingesetzter Verbindungen (Ala), (Alb), (A2a) und/oder (A2b). Die erfindungsgemäßen Massen (K) enthalten bevorzugt Additive (L).

Bei den erfindungsgemäß gegebenenfalls eingesetzten Zuschlagstoffen (M) handelt es sich bevorzugt um Tetraalkoxysilane, z.B. Tetraethoxysilan und/oder deren Teilkondensate, Reaktivweichmacher, Rheologieadditive oder Flammschutzmittel.

Bevorzugte Reaktivweichmacher (M) sind Verbindungen, die Alkylketten mit 6 bis 40 Kohlenstoffatome enthalten und eine gegenüber den Verbindungen (A1) und (A2) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (M) handelt es sich bevorzugt um Polyamidwachse, hydrierte Rizinusöle oder Stearate.

Als Flammschutzmittel (M) können alle typischen Flammschutzmittel eingesetzt werden, wie sie für Kleb- und Dichtstoffsysteme typisch sind, insbesondere halogenierte Verbindungen und Derivate, insbesondere Ester der Phosphorsäure.

Zuschlagsstoffe (M) können dabei sowohl Bestandteil der Komponente (K1) als auch in Komponente (K2) sein. Ebenso können sie auch in beiden Komponenten, (K1) und (K2), enthalten sein.

Falls die erfindungsgemäßen Massen (K) eine oder mehrere Komponenten (M) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile sämtlicher in der Mischung (K) eingesetzten Verbindungen (Ala), (Alb), (A2a) und/oder (A2b) .

Bei den erfindungsgemäßen Massen (K) handelt es sich vorzugsweise um solche bestehend aus einer Komponente (K1) enthaltend
(A1) Organosiliciumverbindungen ausgewählt aus Verbindungen (A1a) und (Alb),
   gegebenenfalls (B) basischen Stickstoff aufweisende Verbindungen,
   gegebenenfalls (C) Füllstoffe,
   gegebenenfalls (D) Siliconharze,
   gegebenenfalls (E) Katalysatoren,
   gegebenenfalls (F) Haftvermittler,
   gegebenenfalls (G) Wasserfänger,
   gegebenenfalls (I) nicht-reaktive Weichmacher,
   gegebenenfalls (J) organische Lösungsmittel,
   gegebenenfalls (L) Additive und
   gegebenenfalls (M) Zuschlagstoffe
   sowie einer Komponente (K2) enthaltend, jeweils bezogen auf 100 Gewichtsteile Verbindungen (A1) in Komponente (K1), mindestens 0,05 Gewichtsteile Wasser sowie
(A2) 10 bis 1000 Gewichtsteile Organosiliciumverbindungen ausgewählt aus Verbindungen (A2a) und (A2b),
   gegebenenfalls (C) Füllstoffe,
   gegebenenfalls (D) Siliconharze,
   gegebenenfalls (F) Haftvermittler,
   gegebenenfalls (H) Verdickungsmittel
   gegebenenfalls (I) nicht-reaktive Weichmacher,
   gegebenenfalls (J) organische Lösungsmittel,
   gegebenenfalls (L) Additive und
   gegebenenfalls (M) Zuschlagstoffe.

Bei den erfindungsgemäßen Massen (K) handelt es sich bevorzugt um solche bestehend aus einer Komponente (K1) enthaltend
(A1) 100 Gewichtsteile Organosiliciumverbindungen ausgewählt aus Verbindungen (A1a) und (Alb),
   (B) basischen Stickstoff aufweisende Verbindungen,
   gegebenenfalls (C) Füllstoffe,
   gegebenenfalls (D) Siliconharze,
   gegebenenfalls (E) Katalysatoren,
   gegebenenfalls (F) Haftvermittler,
   gegebenenfalls (G) Wasserfänger,
   gegebenenfalls (I) nicht-reaktive Weichmacher,
   gegebenenfalls (J) organische Lösungsmittel,
   gegebenenfalls (L) Additive und
   gegebenenfalls (M) Zuschlagstoffe
   sowie einer Komponente (K2) enthaltend, jeweils bezogen auf 100 Gewichtsteile Verbindungen (A1) in Komponente (K1), mindestens 0,05 Gewichtsteile Wasser sowie

(A2) 20 bis 500 Gewichtsteile Organosiliciumverbindungen ausgewählt aus Verbindungen (A2a) und (A2b),
   gegebenenfalls (C) Füllstoffe,
   gegebenenfalls (D) Siliconharze,
   gegebenenfalls (F) Haftvermittler,
   gegebenenfalls (H) Verdickungsmittel
   gegebenenfalls (I) nicht-reaktive Weichmacher,
   gegebenenfalls (J) organische Lösungsmittel,
   gegebenenfalls (L) Additive und
   gegebenenfalls (M) Zuschlagstoffe.

Die erfindungsgemäß eingesetzte Komponente (K1) enthält außer den Verbindungen (A1) sowie gegebenenfalls (B), (C), (D), (E), (F), (G), (H), (I), (J), (L), (M) und (A2a) vorzugsweise keine weiteren Bestandteile.

Die erfindungsgemäß eingesetzte Komponente (K2) enthält außer den Verbindungen (A2), Wasser sowie gegebenenfalls (B), (C), (D), (E), (F), (G), (H), (I), (J), (L) und (M) vorzugsweise keine weiteren Bestandteile.

Die erfindungsgemäßen Massen (K) enthalten außer den Verbindungen (Ala), (Alb), (A2a), (A2b), (B), (C), (D), (E), (F), (G), (H), (I), (J), (L), (M) und Wasser vorzugsweise keine weiteren Bestandteile.

Bei den erfindungsgemäß eingesetzten Bestandteilen kann es sich jeweils um eine Art eines solchen Bestandteils wie auch um ein Gemisch aus mindestens zwei Arten eines jeweiligen Bestandteils handeln.

Die erfindungsgemäß eingesetzte Komponente (K1) weist Viskositäten von bevorzugt 500 bis 1 000 000 mPas, besonders bevorzugt von 1 000 bis 500 000 mPas, insbesondere 1 000 bis 20 000 mPas, jeweils bei 25°C, auf.

Die erfindungsgemäß eingesetzte Komponente (K2) weist Viskositäten von bevorzugt 500 bis 1 000 000 mPas, besonders bevorzugt von 1 000 bis 500 000 mPas, insbesondere 1 000 bis 20 000 mPas, jeweils bei 25°C, auf.

Das Mengenverhältnis der Komponenten (K1) und (K2) kann prinzipiell beliebig gewählt werden, solange die oben geforderten Mengenverhältnisse zwischen Verbindungen (A1) in Komponente (K1) und Verbindungen (A2) sowie Wasser in Komponente (K2) erreicht werden. Bevorzugt liegen die Mengenverhältnisse von (K1) zu (K2) zwischen 5:1 und 1:5, besonders bevorzugt zwischen 2:1 und 1:2, jeweils bezogen auf das Gewicht.

Die Herstellung der erfindungsgemäßen Komponenten (K1) und (K2) kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Massen (K) durch Zusammenmischen der Komponenten (K1) und (K2) sowie gegebenenfalls weiterer Komponenten, wobei die einzelnen Komponenten durch separates Zusammenmischen aller Bestandteile der jeweiligen Komponenten in beliebiger Reihenfolge hergestellt worden sind.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen der Komponente (K1) erfolgt bevorzugt unter Ausschluss von Feuchtigkeit.

Das erfindungsgemäße Verfahren kann kontinuierlich oder diskontinuierlich durchgeführt werden.

Bei den einzelnen Komponenten der erfindungsgemäßen Masse handelt es sich um lagerstabile Vormischungen, die dann kurz vor oder aber während der Verarbeitung, insbesondere an Ort und Stelle, vermischt werden können.

Die Vernetzung der erfindungsgemäßen Massen (K) erfolgt bei bzw. nach Inkontaktbringen der Komponenten (K1) und (K2) vorzugsweise bei Raumtemperatur, wobei das mechanische Vermischen bevorzugt ist. Sie kann, falls erwünscht, auch bei höheren oder niedrigeren Temperaturen als Raumtemperatur, z.B. bei -5° bis 15°C oder bei 30° bis 50°C erfolgen.

Vorzugsweise wird die Vernetzung bei einem Druck von 100 bis 1100 hPa, insbesondere beim Druck der umgebenden Atmosphäre, durchgeführt.

Ein weiterer Gegenstand der Erfindung sind Formkörper hergestellt durch Vernetzung der erfindungsgemäßen Massen (K).

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Die erfindungsgemäßen Massen (K) werden vorzugsweise als Kleb- oder Dichtstoffe eingesetzt. Sie können zum Verkleben jedweder Materialien, wie z.B. Holz, Beton, porösen Steinen, Papier, Stoffen, Leder etc., eingesetzt werden. Im Gegensatz zu einkomponentigen, nur durch Kontakt mit Luftfeuchtigkeit aushärtenden Massen sind sie auch zum Verkleben von wasserundurchlässigen Materialien, wie z.B. Metallen, Glas, wasserundurchlässigen Keramiken, nicht porösen Steinen, Kunststoffen, lackierten Oberflächen etc., geeignet. Dies gilt auch dann, wenn sehr tiefe Klebenähte oder sehr dicke Klebstoffschichten eine Härtung über die Luftfeuchtigkeit unmöglich machen oder zumindest massiv verlangsamen würden. Dabei können sowohl gleiche als auch unterschiedliche Materialen miteinander verklebt werden.

Ebenso können die erfindungsgemäßen Massen (K) zum Abdichten jedweder Fugen zwischen den oben genannten Materialien verwendet werden.

Ein weiterer Gegenstand der Erfindung sind Verfahren zur Verklebung oder Abdichtung von Substraten, bei denen die erfindungsgemäß eingesetzten Komponenten (K1) und (K2) sowie gegebenenfalls weitere Komponenten zunächst miteinander vermischt und anschließend auf die Oberfläche mindestens eines Substrates aufgebracht werden, diese Oberfläche dann mit dem zu verklebenden zweiten Substrat in Kontakt gebracht wird, und die erfindungsgemäße Masse (K) anschließend vernetzen gelassen wird.

Ein weiterer Gegenstand der Erfindung sind Verfahren zur Herstellung von Beschichtungen oder Vergüssen, bei denen die erfindungsgemäß eingesetzten Komponenten (K1) und (K2) sowie gegebenenfalls weitere Komponenten zunächst miteinander vermischt und anschließend auf mindestens ein Substrat aufgebracht werden und die erfindungsgemäße Masse (K) anschließend vernetzen gelassen wird.

Beispiele hierfür sind Vergussmassen für LEDs oder sonstige elektronische Bauteile, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Die erfindungsgemäßen Massen (K) haben den Vorteil, dass sie leicht herzustellen sind.

Die erfindungsgemäßen vernetzbaren Massen (K) haben den Vorteil, dass sie sich durch eine sehr hohe Lagerstabilität der einzelnen Komponenten auszeichnen.

Die erfindungsgemäßen vernetzbaren Massen haben den Vorteil, dass sie nach der Vermischung der Komponenten (K1) und (K2) sowie gegebenenfalls weiterer Komponenten eine hohe Vernetzungsgeschwindigkeit aufweisen und auch in großen Schichtdicken und/oder tiefen Klebefugen zwischen zwei wasser- und luftfeuchtigkeitsundurchlässigen Substraten vollständig durchhärten.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass daraus Klebstoffe mit hoher Zugscherfestigkeit erhalten werden können.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiele

### Herstellungsbeispiel 1-1: Herstellung einer Komponente (K1) für eine 2K Klebstoffformulierung (K1-1)

172,4 g eines beidseitig silanterminierten Polypropylenglycols mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München) werden in einem Laborplanetenmischer der Fa. PC-Laborsystem, ausgestattet mit zwei Balkenmischern, bei ca. 25°C mit 34,4 g eines einseitig silanterminierten Polypropylenglycols mit einer mittleren Molmasse (Mₙ) von 5000 g/mol und Endgruppen der Formel -O-C(=O)-NH-CH₂-SiCH₃(OCH₃)₂ (käuflich erhältlich unter der Bezeichnung GENIOSIL^{®} XM20 bei der Wacker Chemie AG, D-München), 10,4 g Vinyltrimethoxysilan und 3,6 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland) für 2 Minuten bei 200 U/min homogenisiert.

Danach werden 69,2 g eines mit Stearinsäure beschichteten Calciumcarbonats mit einem mittleren Teilchendurchmesser (D50%) von ca. 2,0 µm (käuflich erhältlich unter der Bezeichnung Omyabond 520 bei der Firma Omya, D-Köln) und 103,6 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, Aut-Gummern) unter Rühren eine Minute bei 600 U/min aufgeschlossen. Schließlich werden 6,4 g N-(2-Aminoethyl)-3-amino-propyl-methyldimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die fertige Komponente (K1-1) wird in ein luftdicht verschließbares Gebinde abgefüllt.

### Herstellungsbeispiel 2-1: Herstellung einer Komponente (K2) für eine 2K Klebstoffformulierung (K2-1)

200,0 g eines einseitig silanterminierten Polypropylenglycols mit einer mittleren Molmasse (Mₙ) von 5000 g/mol und Endgruppen der Formel -O-C(=O)-NH-CH₂-SiCH₃(OCH₃)₂ (käuflich erhältlich unter der Bezeichnung GENIOSIL^{®} XM20 bei der Wacker Chemie AG, D-München) werden in einem Laborplanetenmischer der Fa. PC-Laborsystem, ausgestattet mit zwei Balkenmischern, bei ca. 25°C mit 100,0 g eines mit Stearinsäure beschichteten Calciumcarbonats mit einem mittleren Teilchendurchmesser (D50%) von ca. 2,0 µm (käuflich erhältlich unter der Bezeichnung Omyabond 520 bei der Firma Omya, D-Köln), 40,0 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, Aut-Gummern) und 60 g eines thermisch aktivierten kolloidalen Magnesium-Aluminium-Silikates (käuflich erhältlich unter der Bezeichnung Micro-sorb 300 LVM bei der BASF SE, Deutschland) unter Rühren eine Minute bei 600 U/min aufgeschlossen.

Danach werden 10 g Wasser für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die fertige Komponente (K2-1) wird in ein luftdicht verschließbares Gebinde abgefüllt.

### Herstellungsbeispiel 2-2: Herstellung einer Komponente (K2) für eine 2K Klebstoffformulierung (K2-2)

Es wird genauso vorgegangen wie bei Herstellungsbeispiel 2-1, allerdings werden statt 200 g GENIOSIL^{®} XM20 200 g eines einfach verzweigten silanterminierten Polypropylenglycols mit Endgruppen der Formel -O-(CH₂)₃-SiCH₃(OCH₃)₂ (käuflich erhältlich unter der Bezeichnung MS 303H bei der Fa. Kaneka, Japan) eingesetzt.

### Herstellungsbeispiel 2-3: Herstellung einer Komponente (K2) für eine 2K Klebstoffformulierung (K2-3)

Es wird genauso vorgegangen wie bei Herstellungsbeispiel 2-1, allerdings werden statt 200 g GENIOSIL^{®} XM20 200 g eines linearen silanterminierten Polypropylenglycols mit Endgruppen der Formel -O-(CH₂)₃-SiCH₃(OCH₃)₂ (käuflich erhältlich unter der Bezeichnung SAX 750 bei der Fa. Kaneka, Japan) eingesetzt.

### Herstellungsbeispiel 2-4: Herstellung einer Komponente (K2) für eine 2K Klebstoffformulierung (K2-4)

Es wird genauso vorgegangen wie bei Herstellungsbeispiel 2-1, allerdings werden statt 200 g GENIOSIL^{®} XM20 200 g einer Mischung eines linearen silanterminierten Polypropylenglycols und eines silanmodifizierten Polyacrylats, beide mit Silylgruppen der Formel -O-(CH₂)₃-SiCH₃(OCH₃)₂ (käuflich erhältlich unter der Bezeichnung MAX 951 bei der Fa. Kaneka, Japan), eingesetzt.

### Beispiele 1 bis 4

Jeweils 60 g der fertigen Komponente K1-1, werden mit jeweils 40 g der fertigen Komponenten K2-1 (Beispiel 1), K2-2 (Beispiel 2), K2-3 (Beispiel 3) bzw. K2-4 (Beispiel 4) homogen vermischt. Anschließend werden die Eigenschaften der vier erhaltenen Massen bestimmt.

### Hautbildungszeit (HBZ)

Zur Bestimmung der Hautbildungszeit werden die erhaltenen zweikomponentig vernetzenden Massen jeweils in einer 2 mm dicken Schicht auf PE-Folie aufgetragen und bei Normklima (23°C und 50% relative Luftfeuchtigkeit) gelagert. Während des Aushärtens wird einmal pro Minute die Bildung einer Haut getestet. Dazu wird ein trockener Laborspatel vorsichtig auf die Oberfläche der Probe aufgesetzt und nach oben gezogen. Bleibt Probe am Spatel kleben, hat sich noch keine Haut gebildet. Bleibt keine Probe am Spatel mehr kleben, so hat sich eine Haut gebildet und die Zeit wird notiert. Die Ergebnisse finden sich in Tabelle 1.

### Mechanische Eigenschaften

Die 2-komponentig vernetzenden Massen wurden jeweils auf ausgefrästen Teflonplatten mit 2 mm Tiefe ausgestrichen und 2 Wochen bei 23°C, 50% rel. Luftfeuchte gehärtet.

Die Shore-A-Härte wird gemäß DIN EN 53505 bestimmt.

Die Reißfestigkeit wird gemäß DIN EN 53504-S1 bestimmt.

Die Reißdehnung wird gemäß DIN EN 53504-S1 bestimmt.

Das 100%-Modul wird gemäß DIN EN 53504-S1 bestimmt.

Die Ergebnisse finden sich in Tabelle 1

**Tabelle 1**

| **Masse aus Beispiel** | **1** | **2** | **3** | **4** |
|---|---|---|---|---|
| Komponente (K1) | (K1-1) | (K1-1) | (K1-1) | (K1-1) |
| Komponente (K2) | (K2-1) | (K2-2) | (K2-3) | (K2-4) |
| Mischungsverhältnis | 60:40 | 60:40 | 60:40 | 60:40 |
| HBZ [min] | 70 | 85 | 124 | 100 |
| Shore-A-Härte | 30 | 44 | 48 | 47 |
| Reißfestigkeit [N/mm²] | 1,8 | 2,4 | 2,3 | 2,0 |
| Reißdehnung [%] | 366 | 237 | 211 | 204 |
| 100%-Modul [MPa] | 0,7 | 1,3 | 1,3 | 1,3 |

### Herstellungsbeispiel 1-5: Herstellung einer Komponente (K1) für eine 2K Klebstoffformulierung (K1-5)

91 g eines einseitig silanterminierten Polypropylenglycols mit einer mittleren Molmasse (Mₙ) von 5000 g/mol und Endgruppen der Formel -O-C(=O)-NH-CH₂-Si(OCH₃)₃ (käuflich erhältlich unter der Bezeichnung GENIOSIL^{®} XM25 bei der Wacker Chemie AG, D-München), werden in einem Laborplanetenmischer der Fa. PC-Laborsystem, ausgestattet mit zwei Balkenmischern, bei ca. 25°C mit 4,5 g Vinyltrimethoxysilan und 1,5 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland) für 2 Minuten bei 200 U/min homogenisiert.

Danach werden sukzessive 305 g eines sphärischen Aluminiumoxides (käuflich erhältlich unter der Bezeichnung Alunabeads^{™} CB A50 von der Firma Showa Denko, JP-Tokyo), 375 g eines calcinierten Aluminiumoxides (käuflich erhältlich unter der Bezeichnung Alumina CL 3000 SG von der Firma Almatis, D-Ludwigshafen) und 220 g Zinkoxid (käuflich erhältlich unter der Bezeichnung Zinc Oxide Grade AZO 66 von der Firma U.S.Zinc, US-Houston) unter Rühren eine Minute bei 600 U/min aufgeschlossen. Schließlich werden 3 g N-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die fertige Komponente (K1-5) wird in ein luftdicht verschließbares Gebinde abgefüllt.

### Herstellungsbeispiel 2-5: Herstellung einer Komponente (K2) für eine 2K Klebstoffformulierung (K2-5)

96,2 g eines einseitig silanterminierten Polypropylenglycols mit einer mittleren Molmasse (Mₙ) von 5000 g/mol und Endgruppen der Formel -O-C(=O)-NH-CH₂-SiCH₃(OCH₃)₂ (käuflich erhältlich unter der Bezeichnung GENIOSIL^{®} XM20 bei der Wacker Chemie AG, D-München), werden in einem Laborplanetenmischer der Fa. PC-Laborsystem, ausgestattet mit zwei Balkenmischern, bei ca. 25°C mit 305 g eines sphärischen Aluminiumoxides (käuflich erhältlich unter der Bezeichnung Alunabeads^{™} CB A50 von der Firma Showa Denko, JP-Tokyo), 375 g eines calcinierten Aluminiumoxides (käuflich erhältlich unter der Bezeichnung Alumina CL 3000 SG von der Firma Almatis, D-Ludwigshafen) und 220 g Zinkoxid (käuflich erhältlich unter der Bezeichnung Zinc Oxide Grade AZO 66 von der Firma U.S.Zinc, US-Houston) unter Rühren eine Minute bei 600 U/min aufgeschlossen. Anschließend werden unter Temperatur von 55°C 3,8 g Wasser eingemischt und für 1 Minute bei 200 U/min beim Druck von 100 mbar homogenisiert und blasenfrei gerührt.

Die fertige Komponente (K2-5) wird in ein luftdicht verschließbares Gebinde abgefüllt.

### Beispiel 5

Ein Klebstoff basierend auf den Komponenten (K1-5) und (K2-5) wird in einem Mischungsverhältnis von 1:1 bezogen auf das Gewicht in einem Speedmixer gemischt und 2 Wochen bei 23°C, 50% rel. Luftfeuchte aushärten gelassen. Anschließend wird die Masse in mehreren Versuchen zwischen zwei Aluminiumplatten mit einer Fläche von 700 mm² aufgetragen und die Wärmeleitfähigkeit nach ASTM 5470-12 bei verschiedenen Spaltdicken gemessen. Es wird ein λ-Wert von größer 2,8 W/mK ermittelt.

## Patentansprüche

1. Mehrkomponentige vernetzbare Massen (K) enthaltend mindestens eine Komponente (K1) und eine Komponente (K2), **dadurch gekennzeichnet, dass Komponente (K1)** Organosiliciumverbindungen (A1) ausgewählt aus Verbindungen (A1a) der Formel (Ia)
Y¹-[B¹CR²₂SiRₐ(OR¹)₃₋ₐ]ₓ (Ia)
und Verbindungen (A1b) der Formel (Ib)
Y²-[B²-(CR⁴₂)b-Si(OR³)₃]_{y} (Ib)
enthält, wobei
Y¹ einen x-wertigen, über Kohlenstoff gebundenen Polymerrest bedeutet,
Y² einen y-wertigen, über Kohlenstoff gebundenen Polymerrest bedeutet,
B¹ und B² jeweils unabhängig voneinander gleich oder verschieden sein können und eine zweiwertige Bindegruppe -O-, -NH-, -NR'-, -O-CO-NH-, -NH-CO-O-, -NH-CO-NH, -NH-CO-NR'-, -NR'-CO-NH-, -NH-CO-, -CO-NH-, -CO-O-, -O-CO-, -O-CO-O-, -S-CO-NH-, -NH-CO-S-, -CO-S-, -S-CO- oder -S- bedeuten,
R' gleich oder verschieden sein kann und einen einwertigen, gegebenenfalls substituierten Kohlenwasserstoffrest oder eine Gruppe -CH(COOR*)-CH₂-COOR* darstellt, wobei R* für einen Alkylrest steht,
R gleich oder verschieden sein kann und einen einwertigen, gegebenenfalls substituierten, SiC-gebundenen Kohlenwasserstoffrest darstellt,
R¹ und R³ jeweils unabhängig voneinander gleich oder verschieden sein können und Wasserstoffatom oder einen einwertigen, gegebenenfalls substituierten Kohlenwasserstoffrest darstellen,
R² und R⁴ jeweils unabhängig voneinander gleich oder verschieden sein können und Wasserstoffatom oder einen einwertigen, gegebenenfalls substituierten Kohlenwasserstoffrest darstellen, der über Stickstoff, Phosphor, Sauerstoff, Schwefel oder Carbonylgruppe an das Kohlenstoffatom angebunden sein kann,
x und y jeweils unabhängig voneinander eine ganze Zahl von 1 bis 10 sind,
a gleich oder verschieden sein kann und 0, 1 oder 2 ist, mit der Maßgabe, dass im Fall von x=1 a=0 ist,
b gleich oder verschieden sein kann und eine ganze Zahl von 3 bis 10 ist,
und **Komponente (K2)**, jeweils bezogen auf 100 Gewichtsteile Verbindungen (A1) in Komponente (K1), mindestens 0,05 Gewichtsteile Wasser sowie 10 bis 1000 Gewichtsteile einer Komponente (A2) ausgewählt aus Verbindungen (A2a) der Formel (IIa)
Y³-B³-CR⁷₂-SiR⁵_{c}(OR⁶)_{3-c} (IIa)
und Verbindungen (A2b) der Formel (IIb)
Y⁴-[B⁴-(CR¹⁰₂)ₑ-SiR⁸_{d}(OR⁹)_{3-d}]_{z} (IIb)
enthält, wobei
Y³ einen einwertigen, über Kohlenstoff gebundenen Polymerrest bedeutet,
Y⁴ einen z-wertigen, über Kohlenstoff gebundenen Polymerrest bedeutet,
B³ und B⁴ jeweils unabhängig voneinander gleich oder verschieden sein können und eine zweiwertige Bindegruppe -O-, -NH-, -NR"-, -O-CO-NH-, -NH-CO-O-, -NH-CO-NH, -NH-CO-NR"-, -NR"-CO-NH-, -NH-CO-, -CO-NH-, -CO-O-, -O-CO-, -O-CO-O-, -S-CO-NH-, -NH-CO-S-, -CO-S-, -S-CO- oder -S- bedeuten,
R" gleich oder verschieden sein kann und einen einwertigen, gegebenenfalls substituierten Kohlenwasserstoffrest oder eine Gruppe -CH(COOR*)-CH₂-COOR* darstellt, wobei R* für einen Alkylrest steht,
R⁵ und R⁸ jeweils unabhängig voneinander gleich oder verschieden sein können und einen einwertigen, gegebenenfalls substituierten, SiC-gebundenen Kohlenwasserstoffrest darstellen,
R⁶ und R⁹ jeweils unabhängig voneinander gleich oder verschieden sein können und Wasserstoffatom oder einen einwertigen, gegebenenfalls substituierten Kohlenwasserstoffrest darstellen,
R⁷ und R¹⁰ jeweils unabhängig voneinander gleich oder verschieden sein können und Wasserstoffatom oder einen einwertigen, gegebenenfalls substituierten Kohlenwasserstoffrest darstellen, der über Stickstoff, Phosphor, Sauerstoff, Schwefel oder Carbonylgruppe an das Kohlenstoffatom angebunden sein kann,
z eine ganze Zahl von 1 bis 10 ist,
c 1 oder 2 ist,
d gleich oder verschieden sein kann und 1 oder 2 ist und
e gleich oder verschieden sein kann und eine ganze Zahl von 3 bis 10 ist.

2. Vernetzbare Massen gemäß Anspruch 1, **dadurch gekennzeichnet, dass** es sich um zweikomponentige Massen, die aus den Komponenten (K1) und (K2) bestehen, handelt.

3. Vernetzbare Massen gemäß Anspruch 1 oder 2, **dadurch gekennzeichnet, dass** Komponente (A1) Verbindungen (A1a) enthält und Komponente (A2) Verbindungen (A2b) enthält.

4. Vernetzbare Massen gemäß einem oder mehreren der Ansprüche 1 bis 3, **dadurch gekennzeichnet, dass** die Polymerreste Y¹, Y², Y³ und Y⁴ unabhängig voneinander keine mit Wasser oder Feuchtigkeit reaktiven Gruppen aufweisen.

5. Vernetzbare Massen gemäß einem oder mehreren der Ansprüche 1 bis 4, **dadurch gekennzeichnet, dass** sie basischen Stickstoff aufweisende Organosiliciumverbindungen (B) aufweisen.

6. Vernetzbare Massen gemäß einem oder mehreren der Ansprüche 1 bis 5, **dadurch gekennzeichnet, dass**, falls sie Zinnkatalysatoren (E) enthalten, es sich um solche Mengen handelt, dass der Gewichtsanteil Zinn bei höchstens 500 Gew.-ppm liegt, bezogen auf das Gesamtgewicht der Masse (K).

7. Vernetzbare Massen gemäß einem oder mehreren der Ansprüche 1 bis 5, **dadurch gekennzeichnet, dass** sie zinnfrei sind.

8. Vernetzbare Massen gemäß einem oder mehreren der Ansprüche 1 bis 7, **dadurch gekennzeichnet, dass** es sich um solche handelt bestehend aus einer Komponente (K1) enthaltend
(A1) Organosiliciumverbindungen ausgewählt aus Verbindungen (A1a) und (Alb),
gegebenenfalls (B) basischen Stickstoff aufweisende Verbindungen,
gegebenenfalls (C) Füllstoffe,
gegebenenfalls (D) Siliconharze,
gegebenenfalls (E) Katalysatoren,
gegebenenfalls (F) Haftvermittler,
gegebenenfalls (G) Wasserfänger,
gegebenenfalls (I) nicht-reaktive Weichmacher,
gegebenenfalls (J) organische Lösungsmittel,
gegebenenfalls (L) Additive und
gegebenenfalls (M) Zuschlagstoffe
sowie einer Komponente (K2) enthaltend, jeweils bezogen auf 100 Gewichtsteile Verbindungen (A1) in Komponente (K1), mindestens 0,05 Gewichtsteile Wasser sowie
(A2) 10 bis 1000 Gewichtsteile Organosiliciumverbindungen ausgewählt aus Verbindungen (A2a) und (A2b),
gegebenenfalls (C) Füllstoffe,
gegebenenfalls (D) Siliconharze,
gegebenenfalls (F) Haftvermittler,
gegebenenfalls (H) Verdickungsmittel
gegebenenfalls (I) nicht-reaktive Weichmacher,
gegebenenfalls (J) organische Lösungsmittel,
gegebenenfalls (L) Additive und
gegebenenfalls (M) Zuschlagstoffe.

9. Vernetzbare Massen gemäß einem oder mehreren der Ansprüche 1 bis 8, **dadurch gekennzeichnet, dass** die Mengenverhältnisse von (K1) zu (K2) zwischen 5:1 und 1:5 liegen, bezogen auf das Gewicht.

10. Verfahren zur Herstellung der Massen gemäß einem oder mehreren der Ansprüche 1 bis 9 durch Zusammenmischen der Komponenten (K1) und (K2) sowie gegebenenfalls weiterer Komponenten, wobei die einzelnen Komponenten durch separates Zusammenmischen aller Bestandteile der jeweiligen Komponenten in beliebiger Reihenfolge hergestellt worden sind.

11. Formkörper hergestellt durch Vernetzung der Massen gemäß einem oder mehreren der Ansprüche 1 bis 9 oder hergestellt gemäß Anspruch 10.

12. Verfahren zur Verklebung oder Abdichtung von Substraten, bei denen die Komponenten (K1) und (K2) sowie gegebenenfalls weitere Komponenten zunächst miteinander vermischt und anschließend auf die Oberfläche mindestens eines Substrates aufgebracht werden, diese Oberfläche dann mit dem zu verklebenden zweiten Substrat in Kontakt gebracht wird, und die Masse gemäß einem oder mehreren der Ansprüche 1 bis 9 oder hergestellt gemäß Anspruch 10 anschließend vernetzen gelassen wird.

13. Verfahren zur Herstellung von Beschichtungen oder Vergüssen, bei denen die Komponenten (K1) und (K2) sowie gegebenenfalls weitere Komponenten zunächst miteinander vermischt und anschließend auf mindestens ein Substrat aufgebracht werden und die Masse gemäß einem oder mehreren der Ansprüche 1 bis 9 oder hergestellt gemäß Anspruch 10 anschließend vernetzen gelassen wird.

## Claims

1. Multicomponent crosslinkable compositions (K) comprising at least one component (K1) and one component (K2), **characterized in that component (K1)** comprises organosilicon compounds (A1) selected from compounds (Ala) of the formula (Ia)
Y¹-[B¹-CR²₂-SiRₐ(OR¹)₃₋ₐ]ₓ (Ia)
and compounds (Alb) of the formula (Ib)
Y²-[B²-(CR⁴₂)_{b}-Si(OR³)₃]_{y} (Ib)
where
Y¹ is an x-valent polymer radical bonded via carbon,
Y² is a y-valent polymer radical bonded via carbon,
B¹ and B² each independently of one another may be identical or different and are a divalent linking group -O-, -NH-, -NR'-, -O-CO-NH-, -NH-CO-O-, -NH-CO-NH, -NH-CO-NR'-, -NR'-CO-NH-, -NH-CO-, -CO-NH-,-CO-O-, -O-CO-, -O-CO-O-, -S-CO-NH-, -NH-CO-S-, -CO-S-, -S-CO- or -S-,
R' may be identical or different and is a monovalent, optionally substituted hydrocarbon radical or a group -CH(COOR*)-CH₂-COOR*, where R* is an alkyl radical,
R may be identical or different and is a monovalent, optionally substituted, SiC-bonded hydrocarbon radical,
R¹ and R³ each independently of one another may be identical or different and are the hydrogen atom or a monovalent, optionally substituted hydrocarbon radical,
R² and R⁴ each independently of one another may be identical or different and are the hydrogen atom or a monovalent, optionally substituted hydrocarbon radical which may be attached to the carbon atom via nitrogen, phosphorus, oxygen, sulfur or carbonyl group,
x and y each independently of one another are an integer from 1 to 10,
a may be identical or different and is 0, 1 or 2, with the proviso that if x=1 a=0,
b may be identical or different and is an integer from 3 to 10,
and **component (K2),** based in each case on 100 parts by weight of compounds (A1) in component (K1), comprises at least 0.05 part by weight of water and also 10 to 1000 parts by weight of a component (A2) selected from compounds (A2a) of the formula (IIa)
Y³-B³-CR⁷₂-SiR⁵_{c}(OR⁶)_{3-c} (IIa)
and compounds (A2b) of the formula (IIb)
Y⁴-[B⁴-(CR¹⁰₂)ₑ-SiR⁸_{d}(OR⁹)_{3-d}]_{z} (IIb)
where
Y³ is a monovalent polymer radical bonded via carbon,
Y⁴ is a z-valent polymer radical bonded via carbon,
B³ and B⁴ in each case independently of one another may be identical or different and are a divalent linking group -O-, -NH-, -NR"-, -O-CO-NH-, -NH-CO-O-, -NH-CO-NH, -NH-CO-NR"-, -NR"-CO-NH-, -NH-CO-, -CO-NH-,-CO-O-, -O-CO-, -O-CO-O-, -S-CO-NH-, -NH-CO-S-, -CO-S-, -S-CO- or -S-,
R" may be identical or different and is a monovalent, optionally substituted hydrocarbon radical or a group -CH(COOR*)-CH₂-COOR*, where R* is an alkyl radical,
R⁵ and R⁸ each independently of one another may be identical or different and are a monovalent, optionally substituted, SiC-bonded hydrocarbon radical,
R⁶ and R⁹ each independently of one another may be identical or different and are the hydrogen atom or a monovalent, optionally substituted hydrocarbon radical,
R⁷ and R¹⁰ each independently of one another may be identical or different and are the hydrogen atom or a monovalent, optionally substituted hydrocarbon radical which may be attached to the carbon atom via nitrogen, phosphorus, oxygen, sulfur or carbonyl group,
z is an integer from 1 to 10,
c is 1 or 2,
d may be identical or different and is 1 or 2, and
e may be identical or different and is an integer from 3 to 10.

2. Crosslinkable compositions according to Claim 1, **characterized in that** they are two-component compositions consisting of components (K1) and (K2).

3. Crosslinkable compositions according to Claim 1 or 2, **characterized in that** component (A1) comprises compounds (Ala) and component (A2) comprises compounds (A2b).

4. Crosslinkable compositions according to one or more of Claims 1 to 3, **characterized in that** the polymer radicals Y¹, Y², Y³ and Y⁴ independently of one another have no groups that are reactive with water or moisture.

5. Crosslinkable compositions according to one or more of Claims 1 to 4, **characterized in that** they comprise organosilicon compounds (B) containing basic nitrogen.

6. Crosslinkable compositions according to one or more of Claims 1 to 5, **characterized in that**, if they comprise tin catalysts (E), the amounts involved are such that the weight fraction of tin is at most 500 ppm by weight, based on the total weight of the composition (K).

7. Crosslinkable compositions according to one or more of Claims 1 to 5, **characterized in that** they are tin-free.

8. Crosslinkable compositions according to one or more of Claims 1 to 7, **characterized in that** they are of the kind consisting of a component (K1) comprising
(A1) organosilicon compounds selected from compounds (Ala) and (Alb),
optionally (B) compounds containing basic nitrogen,
optionally (C) fillers,
optionally (D) silicone resins,
optionally (E) catalysts,
optionally (F) adhesion promoters,
optionally (G) water scavengers,
optionally (I) unreactive plasticizers,
optionally (J) organic solvents,
optionally (L) additives, and
optionally (M) adjuvants,
and also of a component (K2) comprising, based in each case on 100 parts by weight of compounds (A1) in component (K1), at least 0.05 part by weight of water and also
(A2) 10 to 1000 parts by weight of organosilicon compounds selected from compounds (A2a) and (A2b),
optionally (C) fillers,
optionally (D) silicone resins,
optionally (F) adhesion promoters,
optionally (H) thickeners,
optionally (I) unreactive plasticizers,
optionally (J) organic solvents,
optionally (L) additives, and
optionally (M) adjuvants.

9. Crosslinkable compositions according to one or more of Claims 1 to 8, **characterized in that** the proportions of (K1) to (K2) are between 5:1 and 1:5, based on the weight.

10. Method for producing the compositions according to one or more Claims 1 to 9 by mixing together components (K1) and (K2) and also optionally further components, the individual components having been produced by separately mixing together all of the constituents of the respective components in any order.

11. Shaped article produced by crosslinking the compositions according to one or more of Claims 1 to 9 or produced according to Claim 10.

12. Method for bonding or sealing substrates, wherein components (K1) and (K2) and also optionally further components are first mixed with one another and subsequently applied to the surface of at least one substrate, then this surface is contacted with the second substrate to be bonded, and the composition according to one or more of Claims 1 to 9 or produced according to Claim 10 is subsequently caused to crosslink.

13. Method for producing coatings or encapsulations, wherein components (K1) and (K2) and also optionally further components are first mixed with one another and subsequently applied to at least one substrate and the composition according to one or more of Claims 1 to 9 or produced according to Claim 10 is subsequently caused to crosslink.

## Revendications

1. Masses (K) réticulables, à plusieurs composants, contenant au moins un composant (K1) et un composant (K2), **caractérisées en ce que** le composant (K1) contient des composés organosiliciés (A1) choisis parmi les composés (Ala) de formule (Ia)
Y¹-[B¹-CR²₂-SiRₐ(OR¹)₃₋ₐ]ₓ (la)
et les composés (Alb) de formule (Ib)
Y₂-[B²-(CR⁴₂)_{b}-Si(OR³)₃]_{y} (Ib)
dans lesquelles
Y¹ signifie un radical polymère x-valent, lié par l'intermédiaire de carbone,
Y² signifie un radical polymère y-valent, lié par l'intermédiaire de carbone,
B¹ et B² à chaque fois indépendamment l'un de l'autre, peuvent être identiques ou différents et signifient un groupe de liaison divalent -O-, -NH-, -NR'-, -O-CO-NH-, -NH-CO-O-, -NH-CO-NH, -NH-CO-NR'-, -NR'-CO-NH-, -NH-CO-, -CO-NH-, -CO-O-, -O-CO-, -O-CO-O-,-S-CO-NH-, -NH-CO-S-, -CO-S-, -S-CO- ou -S-,
R' peut être identique ou différent et représente un radical hydrocarboné monovalent, le cas échéant substitué ou un groupe -CH(COOR*)-CH₂-COOR*, R* représentant un radical alkyle,
R peut être identique ou différent et représente un radical hydrocarboné monovalent, le cas échéant substitué, lié par SiC,
R¹ et R³ à chaque fois indépendamment l'un de l'autre, peuvent être identiques ou différents et représentent un atome d'hydrogène ou un radical hydrocarboné monovalent, le cas échéant substitué,
R² et R⁴ à chaque fois indépendamment l'un de l'autre, peuvent être identiques ou différents et représentent un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
x et y à chaque fois indépendamment l'un de l'autre, représentent un nombre entier de 1 à 10,
a peut être identique ou différent et représente 0, 1 ou 2, à condition que si x = 1, alors a = 0,
b peut être identique ou différent et représente un nombre entier de 3 à 10,
et le composant (K2) contient, à chaque fois par rapport à 100 parties en poids de composés (A1) dans le composant (K1), au moins 0,05 partie en poids d'eau ainsi que 10 à 1000 parties en poids d'un composant (A2) choisi parmi les composés (A2a) de formule (IIa)
Y³-B³-CR⁷₂-SiR⁵_{c}(OR⁶)_{3-c} (IIa)
et les composés (A2b) de formule (IIb)
Y⁴-[B⁴-[CR¹⁰₂)ₑ-SiR⁸_{d}(OR⁹)_{3-d]z} (IIb)
dans lesquelles
Y³ signifie un radical polymère monovalent, lié par l'intermédiaire de carbone,
Y⁴ signifie un radical polymère z-valent, lié par l'intermédiaire de carbone,
B³ et B⁴ à chaque fois indépendamment l'un de l'autre, peuvent être identiques ou différents et signifient un groupe de liaison divalent -O-, -NH-, -NR"-, -O-CO-NH-, -NH-CO-O-, -NH-CO-NH, -NH-CO-NR"-, -NR"-CO-NH-, -NH-CO-, -CO-NH-, -CO-O-, -O-CO-, -O-CO-O-,-S-CO-NH-, -NH-CO-S-, -CO-S-, -S-CO- ou -S-,
R" peut être identique ou différent et représente un radical hydrocarboné monovalent, le cas échéant substitué ou un groupe -CH(COOR*)-CH₂-COOR*, R* représentant un radical alkyle,
R⁵ et R⁸ à chaque fois indépendamment l'un de l'autre, peuvent être identiques ou différents et représentent un radical hydrocarboné monovalent, le cas échéant substitué, lié par SiC,
R⁶ et R⁹ à chaque fois indépendamment l'un de l'autre, peuvent être identiques ou différents et représentent un atome d'hydrogène ou un radical hydrocarboné monovalent, le cas échéant substitué,
R⁷ et R¹⁰ à chaque fois indépendamment l'un de l'autre, peuvent être identiques ou différents et représentent un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
z représente un nombre entier de 1 à 10,
c représente 1 ou 2,
d peut être identique ou différent et représente 1 ou 2 et
e peut être identique ou différent et représente un nombre entier de 3 à 10.

2. Masses réticulables selon la revendication 1, **caractérisées**
**en ce qu'**il s'agit de masses à deux composants, qui sont constituées par les composants (K1) et (K2).

3. Masses réticulables selon la revendication 1 ou 2, **caractérisées en ce que** le composant (A1) contient des composés (Ala) et le composant (A2) contient des composés (A2b) .

4. Masses réticulables selon l'une ou plusieurs des revendications 1 à 3, **caractérisées en ce que** les radicaux polymères Y¹, Y², Y³ et Y⁴, indépendamment les uns des autres, ne représentent pas des groupes réactifs avec l'eau ou avec l'humidité.

5. Masses réticulables selon l'une ou plusieurs des revendications 1 à 4, **caractérisées**
**en ce qu'**elles présentent des composés organosiliciés (B) présentant de l'azote basique.

6. Masses réticulables selon l'une ou plusieurs des revendications 1 à 5, **caractérisées en ce que**, dans le cas où elles contiennent des catalyseurs à base d'étain (E), il s'agit de quantités telles que la proportion pondérale d'étain se situe à au plus 500 ppm en poids, par rapport au poids total de la masse (K).

7. Masses réticulables selon l'une ou plusieurs des revendications 1 à 5, **caractérisées**
**en ce qu'**elles sont exemptes d'étain.

8. Masses réticulables selon l'une ou plusieurs des revendications 1 à 7, **caractérisées**
**en ce qu'**il s'agit de masses constituées par un composant (K1) contenant
(A1) des composés organosiliciés choisis parmi les composés (Ala) et (Alb),
le cas échéant (B) des composés présentant de l'azote basique,
le cas échéant (C) des charges,
le cas échéant (D) des résines siliconées,
le cas échéant (E) des catalyseurs,
le cas échéant (F) des promoteurs d'adhérence,
le cas échéant (G) des pièges d'eau,
le cas échéant (I) des plastifiants non réactifs,
le cas échéant (J) des solvants organiques,
le cas échéant (L) des additifs et
le cas échéant (M) des adjuvants
ainsi qu'un composant (K2) contenant, à chaque fois par rapport à 100 parties en poids de composés (A1) dans le composant (K1), au moins 0,05 partie en poids d'eau ainsi que
(A2) 10 à 1000 parties en poids de composés organosiliciés choisis parmi les composés (A2a) et (A2b),
le cas échéant (C) des charges,
le cas échéant (D) des résines siliconées,
le cas échéant (F) des promoteurs d'adhérence,
le cas échéant (H) des épaississants
le cas échéant (I) des plastifiants non réactifs,
le cas échéant (J) des solvants organiques,
le cas échéant (L) des additifs et
le cas échéant (M) des adjuvants.

9. Masses réticulables selon l'une ou plusieurs des revendications 1 à 8, **caractérisées en ce que** les rapports de quantités de (K1) à (K2) se situent entre 5:1 et 1:5, par rapport au poids.

10. Procédé pour la préparation des masses selon l'une ou plusieurs des revendications 1 à 9 par mélange des composants (K1) et (K2) ainsi que le cas échéant d'autres composants, les différents composants ayant été préparés par mélange séparé de tous les constituants des composants respectifs dans un ordre quelconque.

11. Corps façonné, préparé par réticulation des masses selon l'une ou plusieurs des revendications 1 à 9 ou préparées selon la revendication 10.

12. Procédé pour le collage ou le colmatage de substrats, dans lequel les composants (K1) et (K2) ainsi que le cas échéant d'autres composants sont d'abord mélangés les uns avec les autres et ensuite appliqués sur la surface d'au moins un substrat, cette surface est ensuite mise en contact avec le deuxième substrat à coller et on laisse ensuite réticuler la masse selon l'une ou plusieurs des revendications 1 ou 9 ou préparée selon la revendication 10.

13. Procédé pour la réalisation de revêtements ou de scellements, dans lequel les composants (K1) et (K2) ainsi que le cas échéant d'autres composants utilisés selon l'invention sont d'abord mélangés les uns avec les autres et ensuite appliqués sur au moins un substrat et on laisse ensuite réticuler la masse selon l'une ou plusieurs des revendications 1 ou 9 ou préparée selon la revendication 10.
